# EUROPÄISCHE PATENTSCHRIFT

(11) **EP 1 427 569 B1**
(45) Veröffentlichungstag und Bekanntmachung des Hinweises auf die Patenterteilung: **24.09.2008**
(21) Anmeldenummer: 02764513.4
(22) Anmeldetag: 10.07.2002
(51) Int. Cl.: B24B 55/10, B23Q 11/00

(54) **HANDWERKZEUGMASCHINE MIT STAUBABSAUGUNG**
HAND MACHINE-TOOL COMPRISING A DUST EXTRACTION DEVICE
MACHINE-OUTIL A MAIN AVEC DISPOSITIF D'ASPIRATION DE POUSSIERE

(30) Priorität: 13.09.2001 DE 10145040
(43) Veröffentlichungstag der Anmeldung: 16.06.2004
(73) Patentinhaber: ROBERT BOSCH GMBH, 70442 Stuttgart (DE)
(72) Erfinder: REICH, Doris, 70565 Stuttgart (DE); WUENSCH, Steffen, 71088 Holzgerlingen (DE)
(86) Internationale Anmeldenummer: PCT/DE2002/002570
(87) Internationale Veröffentlichungsnummer: WO 2003/026848

(56) Entgegenhaltungen:
- WO-A-01/45545
- DE-C- 3 827 150
- GB-A- 2 343 393
- US-B1- 6 224 471

## Beschreibung

### Stand der Technik

Die Erfindung geht aus von einer Handwerkzeugmaschine nach der Gattung des Anspruchs 1.

Aus der GB 2,343,393 ist eine Handwerkzeugmaschine mit einer Staubbox bekannt, die eine Staubabsaugung mit hohem Wirkungsgrad bei gleichzeitig minimaler Feinstaubemission ermöglicht.

Die Absaugung der bekannten Handwerkzeugmaschine arbeitet mit einem mit dem Antriebsmotor der Handwerkzeugmaschine drehenden Ventilator.

Die zum Auffangen von Schleifstaub vorgesehene Staubbox ist mit einem aus Zellulose bestehenden Falten- bzw. Mikrofilter versehen. Dieses ist empfindlich gegen Feuchtigkeit und ab einem bestimmten Verschmutzungsgrad nicht zu reinigen und schon gar nicht in Wasser bzw. Lösungsmitteln waschbar und daher nicht wiederverwendbar.

Der Faltenfilter kann nur gemeinsam mit dem ihn tragenden Deckel gereinigt werden. Falls eine Reinigung nicht mehr möglich ist, ist der Faltenfilter gemeinsam mit dem Deckel zu entsorgen und durch einen neuen Deckel mit gereinigtem Filter zu ersetzen.

### Vorteile der Erfindung

Die erfindungsgemäße Handwerkzeugmaschine mit den Merkmalen des Anspruches 1 hat den Vorteil, dass der Wirkungsgrad der Staubabsaugung an der Handwerkzeugmaschine verbessert und die ohnehin geringe Feinstaubemission weiter verringert wird.

Dadurch, dass die Filterplatte auf der dem zu bearbeitenden Werkstück zugewandten Seite im Inneren der Staubbox sitzt, verstärkt der diese bedeckende Schleifstaub die Filterwirkung, ohne den Wirkungsgrad der Staubabsaugung zu mindern.

Dadurch, dass die dem Werkstück zugewandte Seite der Staubbox als Deckel ausgestaltet ist, der innen die Filterplatte trägt, ist nach Abnehmen des Deckels die Filterplatte mittels Bürste oder durch Ausklopfen besonders leicht zu reinigen, insbesondere auch in Wasser oder anderen Lösungsmitteln bequem und gründlich waschbar.

Dadurch, dass die Staubbox nur an einer einzigen Stelle, nämlich am Staubrohr - mit der Handwerkzeugmaschine gekoppelt ist und damit unverlierbar festhaltbar ist, sind weitere Haltemittel unnötig und das Ankoppeln bzw. Entnehmen der Staubbox von der Handwerkzeugmaschine ist schneller und bequemer möglich, als bei den bisher bekannten Staubboxen.

Dadurch, dass die Filterplatte lösbar am Deckel der Staubbox befestigt ist, ist sie zwecks Wiederverwendung besonders leicht reinigbar und gegen gereinigte Filterplatten austauschbar.

### Zeichnung

Nachstehend ist die Erfindung anhand einer zugehörigen Zeichnung erläutert.

### Es zeigen

Figur 1 einen seitlichen Teilschnitt der Handwerkzeugmaschine mit Staubbox
Figur 2 die Handwerkzeugmaschine gemäß Figur 1 von oben betrachtet
Figur 3 einen Teillängsschnitt der Staubbox mit ersetzbarer Filterplatte
Figur 4 einen Teillängsschnitt der Staubbox mit unlösbarer Filterplatte und die
Figuren 5 bis 11 unterschiedliche Ausführungsbeispiele von Profilfilterplatten.

### Beschreibung der Ausführungsbeispiele

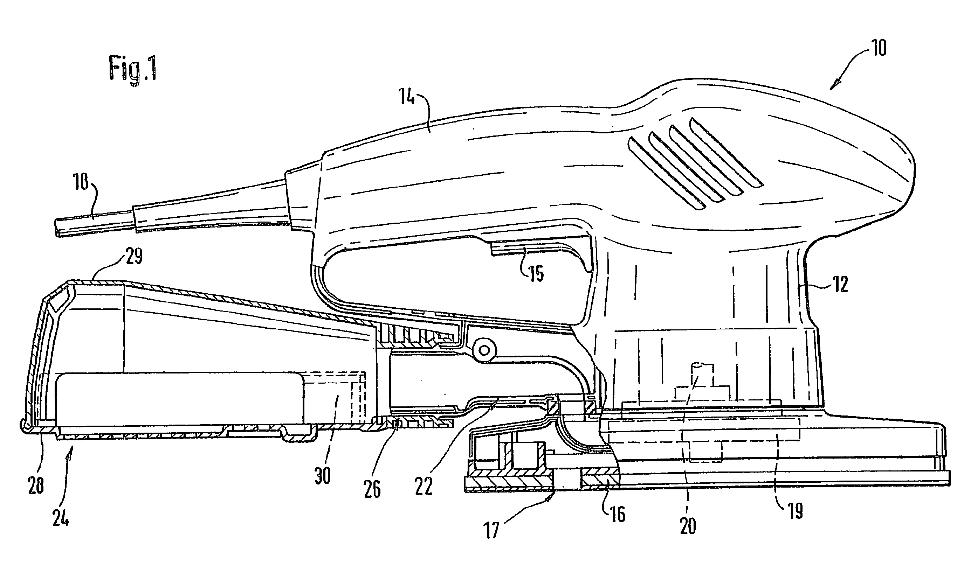

Figur 1 zeigt die Seitenansicht einer als Handschwingschleifer ausgestalteten Handwerkzeugmaschine 10. Diese besteht aus einem Gehäuse 12, das oben einen Handgriff 14 aufweist der sich in Betrachtungsrichtung nach links erstreckt und an seiner Unterseite eine Schalttaste 15 eines nicht näher beschriebenen Schalters enthält. Mit der Schalttaste 15 ist ein nicht näher bezeichneter, mit einer Motorwelle 20 versehener Motor im Inneren des Gehäuses 12 mit einer Spannungsquelle zur Stromversorgung koppelbar.

Bei Betätigen der Schalttaste 15 dreht sich die Motorwelle 20 des Motors und mit dieser ein Ventilator 19, der unter dem Schleifteller 16 sich sammelnden Schleifstaub vom nicht dargestellten Werkstück absaugt und zum Staubrohr 22 hinaus in eine Staubbox 24 über deren Staubeintrittstutzen 26 einbläst. Die Staubbox 24 besteht aus vier Seitenwänden 27 und einem Boden 29 und sie ist mit einem passenden Deckel 28 staubdicht verschließbar. Der Deckel 28 trägt auf seiner ins Innere der Staubbox 24 weisenden Seite eine Filterplatte 30 aus einem porösen, feinporigen Filtermaterial. Die Filterplatte 30 ist zerstörungsfrei vom Deckel 28 lösbar wobei sie bequem durch eine neue bzw. gereinigte Filterplatte ersetzbar ist. Dabei ist der Deckel 28 stets wiederverwendbar ist.

Die Staubbox 24 ist so mit der Handwerkzeugmaschine 10 gekuppelt, dass der Staubeintrittsstutzen 26 bis zu einem Anschlag axial auf das Staubrohr 22 aufgeschoben ist. Dabei weist der Deckel 28 der Staubbox 24 in Betrachtungsrichtung nach unten zu einem nicht mit dargestellten Werkstück.

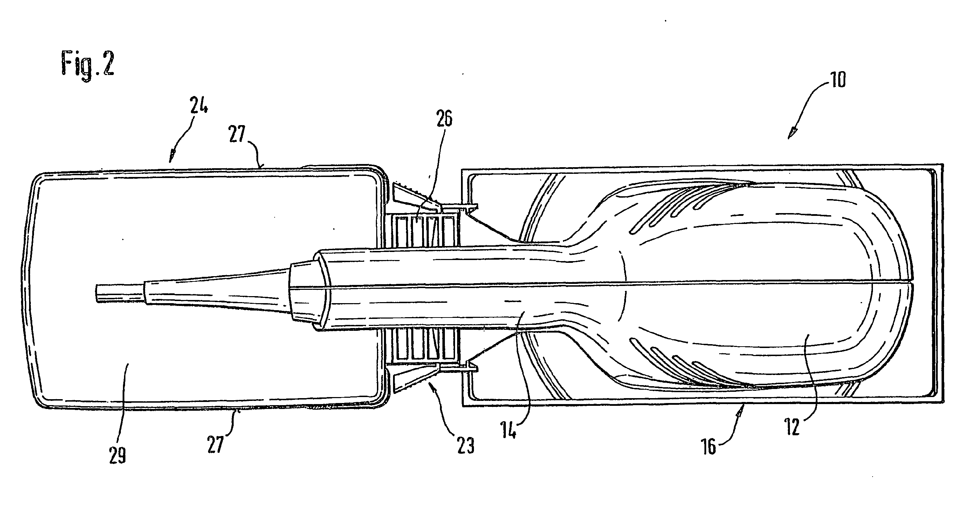

Figur 2 zeigt eine Draufsicht der Handwerkzeugmaschine 10 mit Staubbox 24 gemäß Figur 1, bei der besonders deutlich das Arrettiersystem 23 zum unverlierbaren Festklipsen der Staubbox 24 am Staubrohr 22 der Handwerkzeugmaschine 10 erkennbar ist. Das Arretiersystem 23 besteht aus nicht näher bezeichneten Schwenkhebeln, die beim Ankuppeln der Staubbox 24 an das Staubrohr 22 mit dem Gehäuse 12 der Handwerkzeugmaschine 10 verrasten und die Staubbox 24 am Gehäuse 12 unverlierbar festhalten.

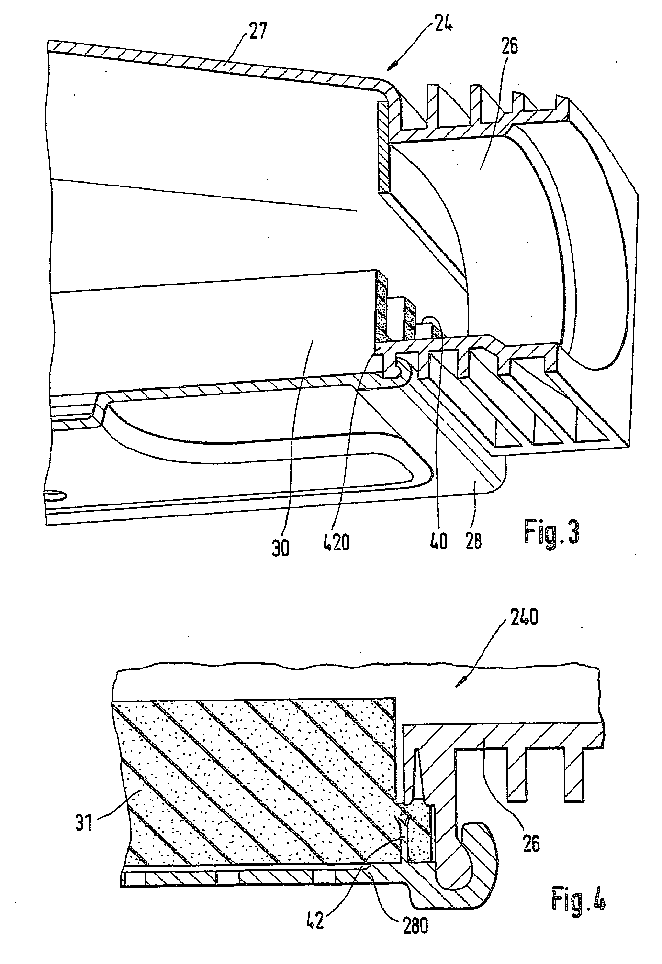

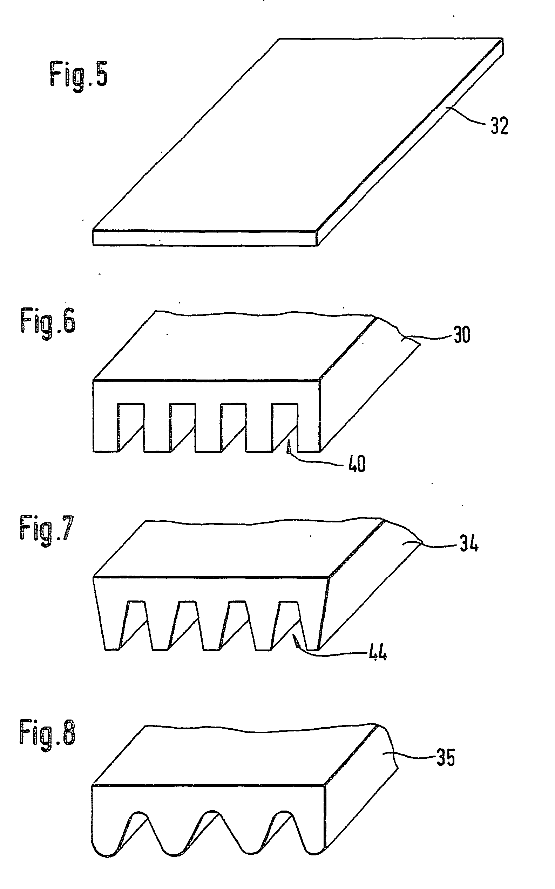

Figur 3 zeigt einen vergrößerten Teillängsschnitt der Staubbox 24, deren Deckel 28 die lösbar daran befestigte Filterplatte 30 trägt, deren ins Innere der Staubbox 240 weisende Seite durch rechteckige Nuten 40 oberflächenvergößert ist. Die Nuten 40 bilden ein kammartiges Profil (Figur 6).

Nach dem Lösen des Deckels 28 von der Staubbox 24 kann die verschmutzte Filterplatte 30 zerstörungsfrei vom Deckel 28 getrennt und anschließend gereinigt werden. Sodann wird eine Austausch-Filterplatte 30 auf den Deckel 28 gelegt. Danach wird dieser mit seiner Schnapprastverbindung auf die Seitenwände 27 geklipst. Dadurch hält sich die Filterplatte 30 zwischen dem Deckel 28 und den Seitenwänden 27 der Staubbox 24 fest. Sie stützt sich mit ihrer Rückseite gegen den Deckel 28 und mit Teilen ihrer Vorderseite gegen stufenartige Vorsprünge 420 der Seitenwände 27 und ist unverlierbar und staubdicht geklemmt.

Figur 4 zeigt einen vergrößerten Längs-Ausschnitt einer Staubbox 240, die im Unterschied zu den Staubboxen aus Figur 1 bis 3 eine unverlierbare, nicht zerstörungsfrei lösbare Filterplatte 31 trägt, die in Dübeldornen 42 verrastet ist.

Die Spitzen der Dübeldornen 42 spreizen sich v-förmig und halten die Filterplatte 31 unverlierbar am Deckel 280 fest.

Figur 5 zeigt ein ebenes Plattenfilter 32, Figur 6 eine Filterplatte 300 mit Kamm-Profil, das durch rechteckig Nuten 40 gebildet wird.

Figur 7 zeigte eine Filterplatte 34, deren im Querschnitt zahnförmiges Profil durch kegelstumpfförmige Ausnehmungen 44 gebildet wird.

Figur 8 zeigt eine Filterplatte 35 mit sinusförmigem Querschnittsprofil.

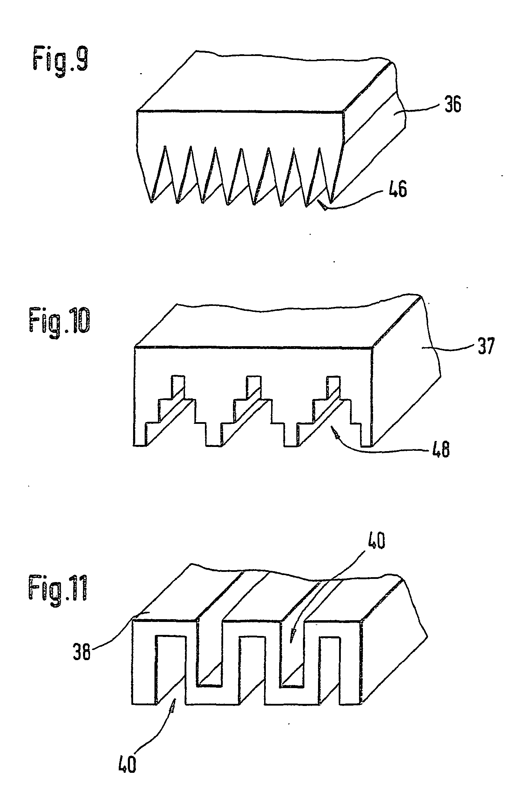

Figur 9 zeigt eine Filterplatte 36 mit v-förmigen Nuten 46, Figur 10 eine Filterplatte 37 mit stufenförmigen Längsnuten 48, die ein Tannenbaumprofil ergeben und die Oberfläche der Filterplatte 37 deutlich vergrößern.

Figur 11 zeigt eine Filterplatte 38 mit auf beiden Seiten im Wechsel eingebrachten rechteckigen Nuten, die ein mäanderförmiges Querschnittsprofil der Filterplatte 38 bilden.

## Patentansprüche

1. Handwerkzeugmaschine (10), mit integrierter Staubabsaugung, die ein Gehäuse (12) aufweist, das ein Staubrohr (22) trägt, mit dem eine Staubbox (24) mittels ihres Staubeintrittsstutzens (26) kuppelbar ist, wobei eine Seitenwand (27) der Staubbox (24) Durchbrüche (25) trägt, die staubdicht von einem Filter übergriffen werden, **dadurch gekennzeichnet, dass** der Filter (30, 31, 32, 33, 34, 35, 36, 37, 38, 300) aus einer ebenen, aus feinporigem, wasser- bzw. lösungsmittelfestem Material bestehenden Platte gebildet ist, insbesondere aus Schaumstoff, deren Oberfläche durch unebene Strukturen vergrößert ist, wobei die Filterplatte (30, 31, 32, 33, 34, 35, 36, 37, 38, 300) auswaschbar ist und auswechselbar mit der Staubbox (24), insbesondere dem Deckel (28), verbunden ist.

2. Handwerkzeugmaschine nach Anspruch 2, **dadurch gekennzeichnet, dass** die unebenen Strukturen.durch Vertiefungen in der Filterplatte gebildet werden.

3. Handwerkzeugmaschine nach Anspruch 1 oder 2, **dadurch gekennzeichnet, dass** die Staubbox (24) auf ihrer in Betriebsposition nach unten weisenden Seite einen Deckel (28) trägt, der Durchbrüche (25) und auf seiner Innenseite die Filterplatte (37) trägt.

4. Handwerkzeugmaschine nach einem der vorhergehenden Ansprüche, **dadurch gekennzeichnet, dass** die Staubbox allein vom Staubrohr (22) der Handwerkzeugmaschine (10) getragen wird.

## Claims

1. Portable power tool (10) with integrated dust extraction, said portable power tool (10) having a housing (12) which carries a dust tube (22) to which a dust box (24) can be coupled by means of its dust-inlet connection piece (26), a side wall (27) of the dust box (24) having apertures (25) which are overlapped by a filter in a dust-tight manner, **characterized in that** the filter (30, 31, 32, 33, 34, 35, 36, 37, 38, 300) is formed from a planar plate made of fine-pored, water- and/or solvent-resistant material, in particular foam plastic, the surface of which is enlarged by non-planar structures, the filter plate (30, 31, 32, 33, 34, 35, 36, 37, 38, 300) being washable and being interchangeably connected to the dust box (24), in particular to the lid (28).

2. Portable power tool according to Claim 2, **characterized in that** the non-planar structures are formed by recesses in the filter plate.

3. Portable power tool according to Claim 1 or 2, **characterized in that** the dust box (24) carries a lid (28) on its side pointing downwards in the operating position, said lid (28) having apertures (25) and carrying the filter plate (37) on its inner side.

4. Portable power tool according to one of the preceding claims, **characterized in that** the dust box is carried solely by the dust tube (22) of the portable power tool (10).

## Revendications

1. Machine-outil à main (10) comportant un dispositif d'aspiration de poussière, intégré, comportant un boîtier (12) muni d'un tube de passage de poussière (22) auquel peut être couplée une boîte à poussière (24) par l'intermédiaire d'un ajutage d'entrée de poussière (26), une paroi latérale (27) de la boîte à poussière (24) comportant des passages (25) entourés par un filtre étanche à la poussière,
**caractérisée en ce que**
le filtre (30, 31, 32, 33, 34, 35, 36, 37, 38, 300) est constitué par une plaque plane d'une matière poreuse, résistant à l'eau et au solvant, cette plaque étant notamment en mousse et sa surface est agrandie par des structures non planes, la plaque de filtre (30, 31, 32, 33, 34, 35, 36, 37, 38, 300) pouvant être lavée et reliée de manière interchangeable à la boîte à poussière (24) notamment avec le couvercle (28).

2. Machine-outil à main selon la revendication 1,
**caractérisée en ce que**
les structures non planes sont formées par des cavités réalisées dans la plaque de filtre.

3. Machine-outil à main selon la revendication 1 ou 2,
**caractérisée en ce que**
la boîte à poussière (24) comporte un couvercle (28) sur son côté tourné vers le bas, en position de fonctionnement, le couvercle comportant des passages (25) et son côté intérieur est équipé de la plaque de filtre (37).

4. Machine-outil à main selon les revendications précédentes,
**caractérisée en ce que**
la boîte à poussière est portée seule par le tube de passage de poussière (22) de la machine-outil à main (10).
